# EUROPÄISCHE PATENTSCHRIFT

(11) **EP 2 158 407 B1**
(45) Veröffentlichungstag und Bekanntmachung des Hinweises auf die Patenterteilung: **08.08.2012**
(21) Anmeldenummer: 08774094.0
(22) Anmeldetag: 16.06.2008
(51) Int. Cl.: F16B 37/00

(54) **VERBESSERTE ANKERMUTTER AUS FASERVERSTÄRKTEM KUNSTSTOFF**
IMPROVED ANCHOR NUT MADE OF FIBER-REINFORCED PLASTIC
AMÉLIORATION D'UN ÉCROU D'ANCRAGE EN PLASTIQUE RENFORCÉ DE FIBRES

(30) Priorität: 15.06.2007 DE 102007028267
(43) Veröffentlichungstag der Anmeldung: 03.03.2010
(73) Patentinhaber: FIREP Rebar Technology GmbH, 40549 Düsseldorf (DE)
(72) Erfinder: TSUKAMOTO, Kenichi, 40667 Meerbusch (DE)
(74) Vertreter: Schrooten, Rolf
(86) Internationale Anmeldenummer: PCT/EP2008/057552
(87) Internationale Veröffentlichungsnummer: WO 2008/152148

(56) Entgegenhaltungen:
- WO-A-03/087538
- GB-A- 2 273 538

## Beschreibung

Die vorliegende Erfindung betrifft eine Ankermutter nach dem Oberbegriff von Anspruch 1.

Derartige Ankermuttern sind allgemein bekannt. Sie werden als Faserverbundwerkstoffteil insbesondere an Gebirgsankern eingesetzt, die ebenfalls aus Kunststoff bestehen können.

Insbesondere für Verankerungen von Mineral-, Fels- oder Nebengestein im untertägigen Bergbau werden Klebeanker mit kurzen Versetzzeiten eingesetzt. Dazu wird nach Herstellen eines Bohrloches dieses Ankerloch etwa über die halbe Länge mit mindestens zwei mit Kunstharz vorzugsweise mit Polyesterharz gefüllten Klebepatronen gefüllt. Solche Klebepatronen bestehen aus dünnen, flexiblen Verbundfolien und sind jeweils ihrer Länge nach in zwei Kammern unterteilt, in welche das Harz bzw. der Härter abgefüllt wird. Eine besonders gekennzeichnete Patrone, die mit einem schneller reagierenden Härter gefüllt wurde, wird zuerst in das Bohrlochtiefste eingeführt. Die anderen Patronen verfügen über deutlich langsamer reagierende Harzsysteme und werden als weitere Patronen anschließend in das Ankerloch geschoben.

Der Felsanker besteht aus Stahl oder Kunststoff mit profilierter Oberfläche oder einem Grobgewinde für besseren Verbund mit der Harzmasse, des Weiteren aus einer am ankerfußseitigen Ende angebrachten Anschärfung, Schräg- oder Meißelspitze, mit welcher der Anker in das Bohrloch eingeführt wird sowie einem ankerkopfseitigen Ende, welches nach Versetzen des Ankers aus dem Bohrloch herausragt und mindestens aus einer den Ankerkopf bildenden Ankerplatte und Ankermutter besteht.

Die Mutter wird nach ihrer Montage auf dem Anker gegen weitere Verdrehung auf dem Ankergewinde temporär derart fixiert, dass ein weiteres Aufschrauben der Mutter auf das Gewinde mit einem unterhalb eines bestimmten Mindestdrehmoments liegenden Drehmoment zunächst blockiert wird. Diese Drehmomentbegrenzung verhindert vorübergehend ein Weiterdrehen der Mutter.

Nach Befüllen des Ankerloches mit Klebepatronen wird die Ankerstange rotatorisch schnell drehend aber translatorisch langsam in das Ankerloch vorgeschoben, wobei nacheinander die Folien und Kammern der Patronen aufgerissen und deren Inhalte intensiv durchmischt werden, um den Härtungsprozess des langsamen und des schnellen Harzes zu starten.

Nachdem die Ankerstange vollständig im Ankerloch versenkt worden ist, wird der Antrieb zum Drehen und Vorschieben des Ankers gestoppt und eine kurze Wartezeit von wenigen Sekunden eingelegt, um dem Harzmaterial der schneller reagierenden Patrone im Bohrlochtiefsten Zeit zu geben, eine Anfangsaushärtung zu erreichen, die ausreicht, den Anker zu fixieren und im Bohrloch verdrehsicher festzulegen. Nach wenigen Sekunden Wartezeit wird das Drehwerk des Antriebes wieder aktiviert und die am Ankerkopf installierte Ankermutter wird losgebrochen, indem die Drehmomentbegrenzung überwunden und die Mutter nun freilaufend angezogen und mit der Ankerplatte gegen den Fels verspannt wird.

Für temporäre Ankerungen von wenigen Stunden bis zu einigen Wochen oder aus Gründen des Korrosionsschutzes werden Anker vorzugsweise aus faserverstärktem Kunststoff (FVK), z. B. aus GFK-Material verwendet. Wird z. B. im Kohlebergbau die Kohle selbst geankert, muss zur maschinellen Gewinnung, also zum Schneiden und Hobeln der Kohle ein Stahlanker entweder vorher wieder zeitaufwändig ausgebaut oder ein Kunststoffanker durch die Maschine zerfräst werden können.

Aus der Druckschrift AU 2006100511 B4 ist eine Ankermutter bekannt, die aus faserverstärktem Kunststoff besteht und ein Innengewinde hat, über das sie auf einen Ankergewinde aufschraubbar ist. sowie an ihrer Außenseite geeignete Konturen bzw. Formgebungen, durch die sie mittels eines formschlüssig wirkenden Werkzeugs auf das Gewinde eines Ankers aufgeschraubt werden kann. Dabei ist in der Ankermutter ein erstes Drehmomentbegrenzungsmittel vorgesehen, das ein weiteres Aufschrauben auf ein teilweise eingeschraubtes Ankergewinde verhindert, wenn das dazu aufgebrachte Drehmoment unterhalb eines ersten Grenz-Drehmoments liegt. Zusätzlich ist noch ein zweites Drehmomentbegrenzungsmittel vorgesehen, das eine weitere Drehmomentübertragung auf die Ankermutter über die formschlüssig wirkenden Konturen oder Formgebungen verhindert, wenn ein zweites Grenz-Drehmoment erreicht oder überschritten ist. Hierdurch kann eine Beschädigung oder Zerstörung der Ankermutter oder des Ankers durch übermäßiges Anziehen der Mutter mit zu hohen Drehmomenten vermieden werden.

Die aus der AU 2006100511 B4 bekannte Ankermutter besteht aus zwei Teilabschnitten, die durch eine sogenannte Schwächungsstelle miteinander verbunden sind. In dem ersten Teilabschnitt, der mit dem Innengewinde zum Aufschrauben auf das Ankergewinde versehen ist, befindet sich als erstes Drehmomentbegrenzungsmittel eine Berstscheibe, die in diesen ersten Teilabschnitt der Ankermutter eingeformt ist. Der optional gewindefreie zweite Teilabschnitt weist die außenseitigen Konturen bzw. Formgebungen auf, die für das formschlüssig wirkende Werkzeug erforderlich sind. Das zweite Drehmomentbegrenzungsmittel wird durch die zwischen beiden Teilabschnitten liegende Schwächungsstelle gebildet, die eine Querschnittsreduzierung sowie zusätzlich darin eingebrachte Durchbrüche umfasst. Wenn ein entsprechend hohes Drehmoment auf den zweiten Teilabschnitt aufgebracht wird, soll diese Schwächungsstelle brechen und der zweite Teilabschnitt in kleine Stückchen zerfallen.

Von Nachteil an diesen beiden Drehmomentbegrenzungsmitteln ist es, dass sie nicht nur relativ aufwendig und somit teuer in der Herstellung sondern vor allem sehr schwierig mit einem exakten Grenzwert hinsichtlich des zu begrenzenden Drehmoments herzustellen sind. So haben im Spritzgussverfahren direkt hergestellte Trennungen in Form von Schwächungsstellen eine starke Abhängigkeit des effektiven Abschermomentes von der angewendeten Drehwinkelgeschwindigkeit und anderen Einflüssen wie dem dabei auftretenden überlagerten Moment und der aufgebrachten Vorschubkraft, die ihrerseits ebenfalls sehr stark streuen.

Außerdem bedeutet das Abscheren und Zerstören des kompletten zweiten Teilabschnitts der Ankermutter zur Erfüllung der zweiten Drehmomentbegrenzungsfunktion zwangsläufig auch eine notwenige größere Baulänge der gesamten Mutter, damit nach dem Abscheren und dem Verlust der zweiten Teillänge, die deshalb von vom herein nichttragend war, die notwendigen Haltekräfte über die verbleibende Gewindelänge übertragen werden können. Die größere Gesamtlänge der Ankermutter ist insbesondere auch vor der Montage und Lagerungs- und Transportgesichtspunkten von Nachteil. Wenn man diesen Nachteil einer größeren Ankermutterlänge vermeiden möchte, so würde dies nur bei einer damit verbundenen erheblichen Einschränkung der Gesamttragfähigkeit der Mutter möglich sein, was ebenfalls von Nachteil ist. In jedem Fall aber muss der auf dem Ankerende verbleibende Restkörper der Mutter mit kurzem Gewinde die volle Last auf wenigen Gewindegängen mit der für Kunststoffgewinde typischen hohen Steigung ertragen. Dabei reagiert er bei späterer Überlastung spröde und kann aufgrund zunehmender gebirgsmechanischer Belastung nur schlagartig versagen.

Ferner ist das unkontrollierte Auseinanderbrechen eines Teilkörpers der Ankermutter von Nachteil, dessen Bruchstücke das Werkzeug bzw. den zum Aufschrauben der Mutter verwendeten Adapter verstopfen bzw. blockieren können.

Aus der GB 2 349 679 A ist das Setzen eines Ankers mit einer Ankermutter bekannt, bei der ein quer zur Längsachse der Ankermutter angebrachter Stift Verwendung findet, über den das auf die Ankermutter aufgebrachte Drehmoment auf den Anker übertragen wird. Der am oberen Randbereich der Ankermutter angebrachte Stift weist zwei Ringnuten als Sollbruchstellen auf, an denen der Stift abschert, sobald das Drehmoment ein vorbestimmtes Grenzdrehmoment übersteigt. Der obere Randbereich der Mutter weist dabei eine geringere Wanddicke auf als der übrige, mit dem Innengewinde versehene Bereich der Ankermutter.

Ferner ist aus der WO 03/087538 A1 ein Anker bekannt, der an einem Ende entweder sich axial auf der Stirnfläche des Ankers erstreckende oder sich radial auf einer Umfangsfläche erstreckende, verformbare Vorsprünge aufweist, über die ein Drehmoment von einer Antriebsvorrichtung direkt auf den Anker aufgebracht werden kann, solange dieses Drehmoment unterhalb eines vorbestimmten Grenzdrehmoments liegt. Sobald dieses Grenzdrehmoment aufgebracht oder überschritten wird, werden die Vorsprünge abgeschert. Eine Ankermutter wird bei diesem hier vorgeschlagenen Anker nicht verwendet.

Aus der GB 2 273 538 A ist eine Ankermutter nach dem Oberbegriff von Anspruch 1 bekannt. Sie weist ein erstes Drehmomentbegrenzungsmittel auf, welches ein weiteres Einschrauben eines teilweise eingeschraubten Ankers mit einem unterhalb eines ersten Grenz-Drehmoments liegenden Drehmoment verhindert. Dieses erste Drehmomentbegrenzungsmittel ist dabei durch einen Stift gebildet, der quer zur Längsachse der Ankermutter das Innengewinde durchquert.

Aufgabe der vorliegenden Erfindung ist es, eine preiswert herzustellende und leicht handhabbare Ankermutter der eingangs genannten Art zu schaffen, die die vorgenannten Nachteile vermeidet und auf konstruktiv einfache Weise eine Beschädigung oder Zerstörung der Ankermutter oder des Ankers beim Versetzen des Ankers in ein Bohrloch verhindert und dabei eine hohe und von den wechselhaften Bedingungen beim Aufschrauben unabhängige Genauigkeit der zu begrenzenden Drehmomente aufweist. Dabei soll sie bei geringerer Gesamtlänge eine hohe Tragfähigkeit aufweisen und ein Blockieren des zum Aufschrauben verwendeten Werkzeugs sicher vermeiden.

Diese Aufgabe wird erfindungsgemäß durch eine Ankermutter nach Anspruch 1 gelöst. Vorteilhafte Ausgestaltungen und Weiterbildungen der Erfindung ergeben sich aus den abhängigen Ansprüchen.

Wesentlich bei der erfindungsgemäßen Lösung ist es, dass die Ankermutter mit zweiten Drehmomentbegrenzungsmitteln versehen ist, welche eine weitere Drehmomentübertragung auf die Ankermutter über die formschlüssig wirkenden Konturen oder Formgebungen verhindern, wenn ein zweites Grenz-Drehmoment erreicht oder überschritten ist, und dass die zweiten Drehmomentbegrenzungsmittel durch zwei oder mehr aus Kunststoff bestehende Vorsprünge gebildet sind, die einstückig an eine Außenfläche der Ankermutter angeformt sind.

Der Hauptvorteil liegt dabei darin, dass selbst unter wechselnden Einsatzbedingungen beim Aufschrauben der Muttern eine Beschädigung der Anker sowie der Mutter zuverlässig verhindert wird. Die gewünschten Drehmomente sind hier bei beiden Drehmomentbegrenzungsmitteln trotz der Fertigung aus Kunststoff hochexakt einstellbar. Dabei kann der Momentenwiderstand für die jeweilige Auslösung bei dem ersten Drehmomentbegrenzungsmittel vorzugsweise über die Dicke des Stiftes und bei den zweiten Drehmomentbegrenzungsmitteln über die Wahl der Anzahl, der Form und der Größe der Vorsprünge auf den gewünschten Wert eingestellt werden.

Ferner wird die Konstruktion vor allem hinsichtlich der beiden Drehmomentbegrenzungsmittel wesentlich vereinfacht, so dass die Kosten für die Herstellung der Ankermutter deutlich reduziert sind.

Auch wird eine Zerteilung der Mutter in zwei Teilabschnitte sowie ein unkontrolliertes Auseinanderbrechen eines Teilabschnittes und die damit einhergehende Gefahr einer Blockierung des entsprechenden Werkzeugs vermieden. Durch das Abscheren der außenseitigen Vorsprünge wird eine weitere Übertragung auf den Ankerstab aufgehoben, ohne die Gewindefunktion des Ankers oder der Mutter zu beeinträchtigen.

Besonders vorteilhaft ist es, wenn die zweiten Drehmomentbegrenzungsmittel durch mehrere Vorsprünge gebildet sind, die gleichmäßig verteilt am Außenumfang der Ankermutter angeformt sind. Vorzugsweise werden drei bis sechs Vorsprünge angeordnet, wobei die Fasern des die Mutter bildenden Verbundwerkstoffs vorzugsweise auch in den die zweiten Drehmomentbegrenzungsmitteln bildenden Vorsprüngen vorhanden sind.

Gemäß einer ersten besonders bevorzugten Ausführungsform der Erfindung ist vorgesehen, dass die Vorsprünge zahnförmig oder prismenförmig oder pydramidenförmig ausgebildet sind. Hierdurch kann gleichzeitig ein einfaches Aufsetzen und eine einfache Zentrierung des Schraubwerkzeugs erreicht werden. Die Vorsprünge brauchen dabei nur über sehr kurze Wege formschlüssig in die entsprechend geformten Ausnehmungen der inneren Anfasung eines Setzwerkzeuges zu greifen.

Besonders vorteilhaft ist es ferner, wenn der das erste Drehmomentbegrenzungsmittel bildende solide Stift aus einem Kunststoff besteht, welcher ein sprödes Bruchverhalten aufweist. Dadurch wird erreicht, dass der Kunststoffstift so bricht, dass seine im Mutternkörper verbleibenden beiden Enden nicht in den Gewindegang ragen und den Freilauf der Mutter nicht beeinträchtigen. Auch kann das ausgebrochene Mittelstück des Kunststoffstiftes so nicht verklemmt und durch das Ankerende während des Schraubvorganges leicht ausgeworfen werden.

Der Abscherwiderstand für diesen temporär wirkenden Kunststoffstift kann vorteilhafterweise so eingestellt werden, dass er einerseits nicht zu niedrig ist, so dass der Stift nicht durch die zunehmende Viskosität der Harzmasse und den Drehwiderstand des Ankers im Bohrloch zu früh auslöst. Eine ausreichende Mischung der Harzmassen kann so sichergestellt werden. Andererseits kann der Abscherwiderstand für den Kunststoffstift vorteilhafterweise gleichzeitig auch so eingestellt werden, dass das übertragene Drehmoment nicht zu groß wird, so dass ein Aufsplittern des faserverstärkten Kunststoffmaterials eines Kunststoffankers (ähnlich wie Holz) vermieden wird.

Vorteilhafterweise kann das Auslöseverhalten des Scherstifts aus Kunststoff durch einen entsprechend angepassten E-Modul, entsprechende Geometriegebung und/oder insbesondere auch durch Oberflächenfinish in der gewünschten Art und Weise beeinflusst werden. Der bereits vor der endseitigen Montage der Mutter auf dem Ankerkopf quer im Mutternkörper installierte Kunststoffstift wird kommt an der Stirnfläche des Ankerstabes zu Anlage und verhindert vorübergehend ein Weiterdrehen der Mutter, ohne dass der Anker angebohrt und die Mutter aufwändig montiert werden muss. Dabei bieten die Lösungen in Kunststoff eine hohe Variantenvielfalt bei gleichzeitig niedrigen Kosten für Material und Arbeitsaufwand.

Gemäß einer zweiten besonders bevorzugten Ausführungsform der Erfindung ist vorgesehen, dass die Ankermutter in Längsrichtung in mindestens zwei Stufen ausgebildet ist, die unterschiedliche Durchmesser oder Erstreckungen in einer senkrecht zur Längsachse der Ankermutter gelegenen Ebene aufweisen. Diese Stufen sind dauerhaft fest miteinander verbunden. Vorzugsweise sind die Stufen zylinderförmig ausgebildet, wobei die einem Ankerteller zugewandte vorderseitige Stufe einen größeren Außendurchmesser aufweist, als die endseitig Stufe. Vorzugsweise kann die vordere Stirnfläche der vordersten Stufe zum Winkelausgleich ballig oder konisch ausgebildet sein.

Besonders vorteilhaft ist es dabei, wenn die zweiten Drehmomentbegrenzungsmittel an der Kontaktstelle zwischen zwei Stufen, insbesondere an die Kontaktstelle zwischen der ersten und der zweiten Stufe, an den Außenumfang der kleineren Stufe angeformt sind.

Weiterhin ist es dabei günstig, wenn die zweiten Drehmomentbegrenzungsmittel zusätzlich auch an die Stirnfläche der größeren Stufe angeformt sind, wobei senkrecht zur Längsachse der Ankermutter die maximale Erstreckung der zweiten Drehmomentbegrenzungsmittel kleiner oder gleich der Erstreckung der größeren Stufe ist. Das bedeutet also, dass die zweiten Drehmomentbegrenzungsmittel nach außen nicht über den Umfang der größeren Stufe vorstehen.

Vorteilhafterweise kann außerdem vorgesehen sein, dass die Ankermutter außenseitige Formelemente aufweist, durch welche sie mittels eines formschlüssig wirkenden Werkzeugs auch nach dem Auslösen der zweiten Drehmomentbegrenzungsmittel noch weiter aufschraubbar oder wieder lösbar ist. Ein Nachspannen oder Entfernen der Ankermutter ist so problemlos möglich.

Bei einer mehrstufigen Ausbildung der Ankermutter können die Formelemente vorzugsweise durch eine polygonförmige Außenkontur an der kleineren Stufe gebildet sein. Insbesondere kann diese Außenkontur entweder parallel als Zweikant oder trigonal als Dreikant oder hexagonal als Sechskant ausgebildet sein.

Eine besonders hohe Tragfähigkeit der Ankermutter kann dadurch erreicht werden, dass sich das Innengewinde über die gesamte Länge der Ankermutter erstreckt. Dabei erstreckt es sich insbesondere auch durchgehend über ggf. vorhandene mehrere Stufen der Ankermutter hinweg. Die erfindungsgemäße Ankermutter kann dabei unter Selbshemmungsbedingungen mit diversen Gewindesteigungen für unterschiedliche Ankergewinde ausgeführt werden.

Die vorliegende Erfindung betrifft ferner ein Werkzeug zum Aufschrauben einer Ankermutter der vorangehend beschriebenen Art. Es zeichnet sich dadurch aus, dass es eine Innenkontur hat, die komplementär zu den zweiten Drehmomentbegrenzungsmitteln der Ankermutter ausgebildet ist. Die Drehmomentübertragung kann vorzugsweise mittels eines Setzwerkzeuges mit speziell geformten Innensechskant (Nuss) mit speziell eingearbeiteten Ausnehmungen für die Vorsprünge der zweiten Drehmomentbegrenzungsmittel am Umfang der Ankermutter erfolgen. Nach dem Abscheren dieser Vorsprünge wird eine weitere Übertragung des Drehmoments auf den Ankerstab aufgehoben, ohne die Gewindefunktionen des Ankers und der Ankermutter zu beeinträchtigen.

Gegenstand der vorliegenden Erfindung ist auch ein Anker-Set, das mindestens eine erfindungsgemäße Ankermutter der voranstehend beschriebenen Art sowie mindestens einen Anker umfasst, wobei der Anker vorzugsweise ebenfalls aus faserverstärktem Kunststoff besteht.

Vorteilhafterweise kann dieses Anker-Set zusätzlich mindestens eine Ankerplatte umfassen, die vorzugsweise ebenfalls aus faserverstärktem Kunststoff besteht.

Außerdem kann das Anker-Set oder eine erfindungsgemäße Ankermutter auch mit einem Werkzeug der vorangehend beschriebenen Art kombiniert werden.

Die vorliegende Erfindung betrifft ferner ein Verfahren zum Setzen bzw. Versetzen eines Ankers in ein Bohrloch unter Verwendung einer erfindungsgemäßen Ankermutter der vorangehend beschriebenen Art. Dabei werden mehrere mit aushärtbaren Harzmassen gefüllte Klebepatronen in das Bohrloch gefüllt, wobei die zuerst eingeführte Klebepatrone eine Harzmasse enthält, die schneller aushärtet als die Harzmasse nachfolgender Klebepatronen. Unabhängig davon wird die Ankermutter soweit auf den Anker aufgeschraubt, bis der das erste Drehmomentbegrenzungsmittel bildende Scherstift an der Stirnfläche des Ankers zur Anlage kommt. Danach wird der Anker über die das zweite Drehmomentbegrenzungsmittel bildenden Vorsprünge der Ankermutter drehend in das Bohrloch vorgeschoben, wobei er die eingefüllten Klebepatronen nacheinander aufreißt. Nach dem Aufreißen der zuerst eingeführten Klebepatrone wird der auf die Ankermutter einwirkende Antrieb zum Drehen und Vorschieben des Ankers für eine Wartezeit gestoppt, die mindestens so lang ist, dass die Harzmasse der zuerst eingeführten Klebepatrone zumindest eine Anfangsaushärtung erreicht hat, welche den Anker verdrehsicher im Bohrloch fixiert. Nach Ablauf dieser Wartezeit wird der Antrieb zum Drehen der Ankermutter wieder aktiviert, wobei der Scherstift überlastet wird und zerbricht. Dadurch kann die Ankermutter nun weiter auf den Anker aufgeschraubt werden, bis sie gegen ein Hindernis, insbesondere gegen eine auf dem Anker angeordnete Ankerplatte anschlägt, wobei dann die Vorsprünge überlastet und abgeschert werden.

Weitere Vorteile und Merkmale der Erfindung ergeben sich aus der nachfolgenden Beschreibung und den in den Zeichnungen dargestellten Ausführungsbeispielen. Es zeigen:
- Figur 1:: Ausführungsbeispiel einer erfindungsgemäßen Ankermutter in einer Seitenansicht;
- Figur 2:: Ansicht der Rückseite der Ankermutter aus Figur 1 aus Richtung des Pfeile II;
- Figur 3:: ein erfindungsgemäßes Setzwerkzeug in einer Seitenansicht;
- Figur 4:: Ansicht der Vorderseite des Setzwerkzeuges aus Figur 3 aus Richtung des Pfeiles IV;
- Figur 5:: Schematische Darstellung einer ersten Zwischensituation beim Versetzen eines Ankers mit einer erfindungsgemäßen Ankermutter; und
- Figur 6:: Schematische Darstellung einer zweiten Zwischensituation beim Versetzen des Ankers aus Figur 5.

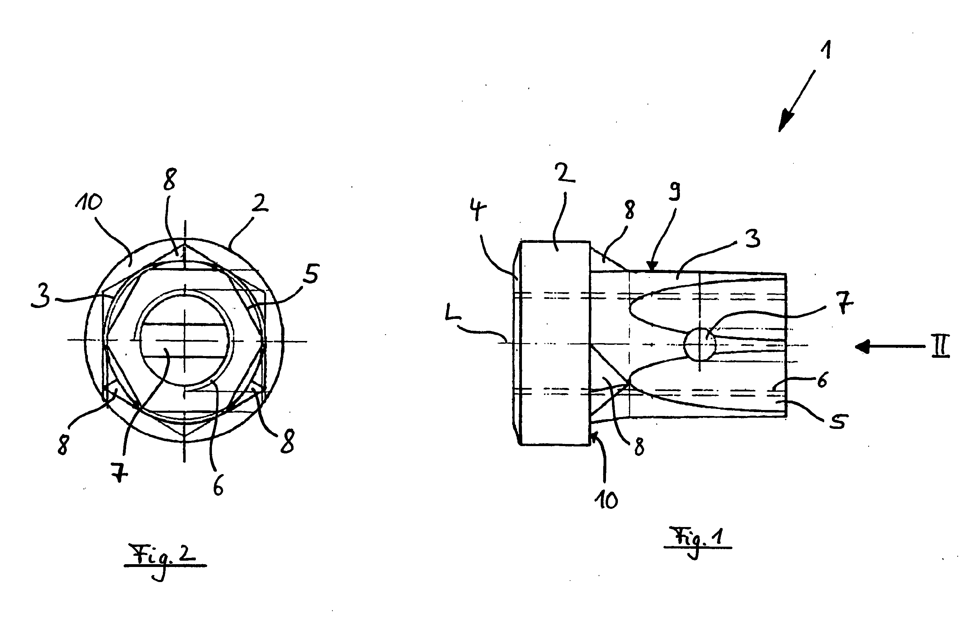

Figur 1 zeigt ein Ausführungsbeispiel einer erfindungsgemäßen Ankermutter 1 aus Faserverbundwerkstoff, die zweistufig ausgeführt ist. Sie umfasst einen zylindrischen Bund als erste Stufe 2 und ein zylindrisches Segment als zweite Stufe 3, wobei die erste Stufe 2 einen größeren Durchmesser hat als die zweite Stufe 3. An der vorderen Stirnseite der Stufe 2 ist ein kegelstumpfartiger Anlagebereich 4 für eine hier nur schematisch angedeutete Ankerplatte 14 angeformt. Die zweite Stufe 3 weist einen konifizierten Sechskantabschluss 5 auf. Ein Innengewinde 6 erstreckt sich durchgehend über die gesamte axiale Länge der Ankermutter 1.

Um einerseits ein einwandfreies Mischen der Harzsäule im Bohrloch 15 und andererseits ein zerstörungsfreies Versetzen des Ankers 16 sicherzustellen, wird die erfindungsgemäße Ankermutter 1 mit zwei kombinierten, drehmomentbegrenzenden Funktionen ausgestattet, die während des Versetzens eines Felsankers nacheinander aber in einem Arbeitsgang aktiviert werden.

Erfindungsgemäß ist ein aus Kunststoff bestehender Scherstift 7 als erstes Drehmomentbegrenzungsmittel vorgesehen, der quer zur Längsachse der Ankermutter 1 das Innengewinde 6 durchquert. Bei dem in den Figuren 1 und 2 dargestellten Ausführungsbeispiel erstreckt sich der Scherstift über den gesamten Durchmesser der Ankermutter 1, so dass er beidseitig das Innengewinde 6 durchquert. Es reicht jedoch in alternativen Ausführungsformen der erfindungsgemäßen Ankermutter auch aus, dass der Scherstift 7 lediglich an einer einzigen Umfangsstelle das Innengewinde 6 durchquert, so dass er sich also ausgehend vom Innengewinde 6 mit einem freien Ende radial nach innen erstreckt. In allen Varianten kann der Scherstift 7 einstückig mit der Ankermutter 1 ausgeführt oder als separates Element in die Ankermutter 1 eingebracht sein. Weiterhin sind als zweite Drehmomentbegrenzungsmittel drei aus Kunststoff bestehende, hier nockenförmig ausgebildete Vorsprünge 8 einstückig an die Außenfläche 9 der zweiten Stufe 3 der Ankermutter 1 angeformt. Gleichzeitig sind die Vorsprünge 8 auch an die rückseitige Stirnfläche 10 der ersten Stufe 2 angeformt.

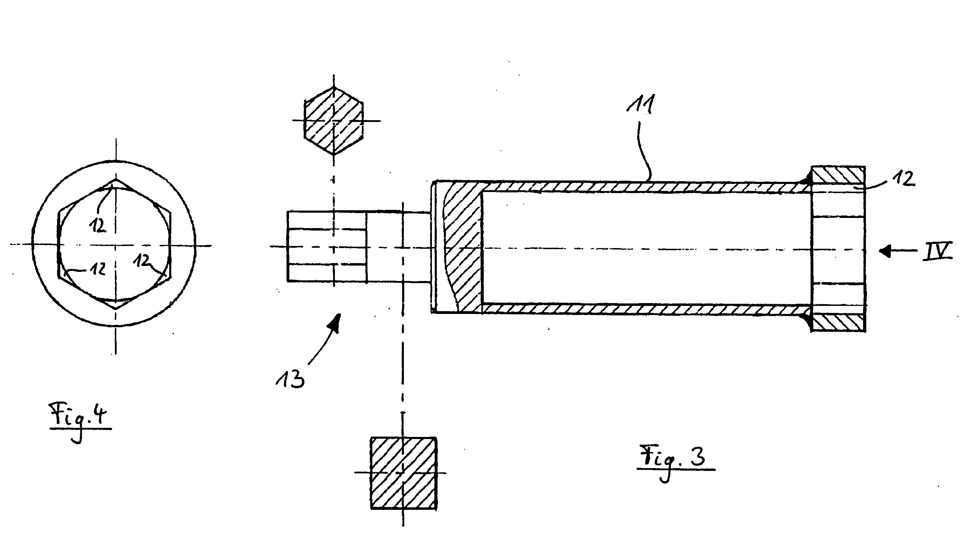

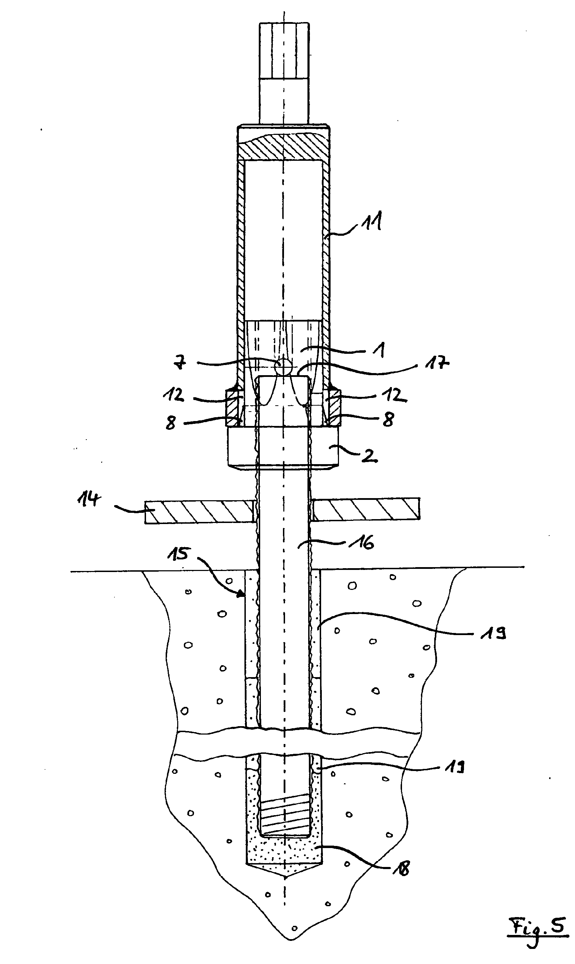

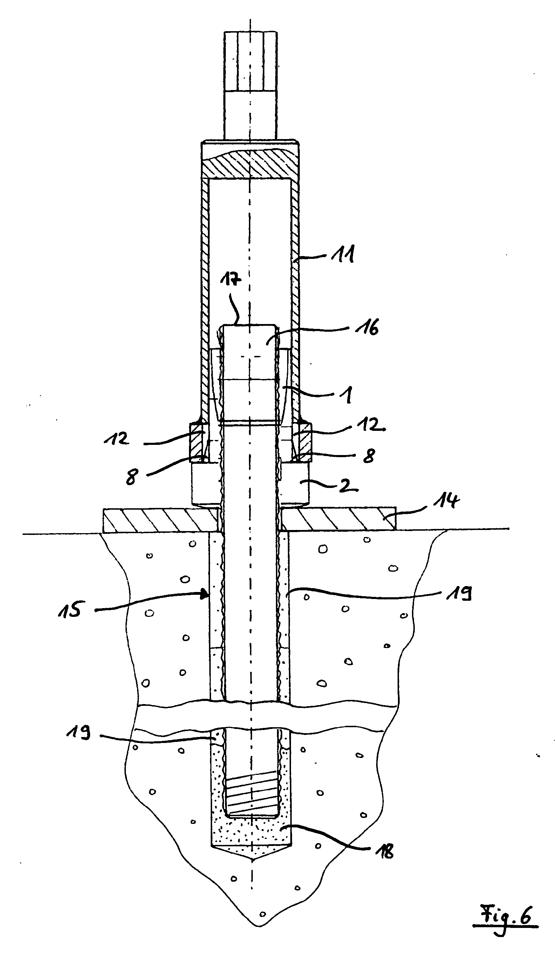

Die Mutter 1 wird auf dem in den Figuren 5 und 6 dargestellten Anker 16 vormontiert, indem sie endseitg aufgeschraubt wird, bis der Scherstift 7 an der Stirnfläche 17 des Ankers 16 zur Anlage kommt und ein weiteres Aufdrehen verhindert wird. Während des Versetzens wird der Anker 16 über die Mutter 1 in der Weise drehend in das Bohrloch 15 vorgeschoben, indem beispielsweise das in Figur 3 dargestellte Setzwerkzeug 11 mit seinen formschlüssigen Ausnehmungen 12 die nockenförmigen Vorsprünge 8 umgreift und über diese ein Drehmoment überträgt. Das zur erfindungsgemäßen Ankermutter 1 passende ein- oder mehrteilige Setzwerkzeug 11 kann vorzugsweise in der Form eines Adapters mit unterer formschlüssiger Anpassung 13 an ein Bohrmaschinenfutter oder dergleichen ausgeführt sein.

Nach anfänglichem Aushärten des im tiefsten Teil des Bohrlochs 15 angemischten und schnell aushärtenden Harzmasse 18 wird der Anker 16 festgelegt und der Drehwiderstand erheblich erhöht, so dass der Scherstift 7 überlastet wird und zerbricht Nun kann die Mutter 1 auf dem Ankerende frei bewegt werden, bis sie mit der Stirnfläche 4 an der Ankerplatte 14 zur Anlage kommt und gegen diese verspannt wird (Figur 6). Dabei ist die übrige Harzmasse 19 noch zähflüssig, so dass der in diesem Bereich befindliche Teil des Ankerschaftes vorgespannt wird und das erst danach aushärtende Harz 19 die so aufgebrachte Vorspannung des Ankers 16 "konserviert" und speichert. Mit zunehmenden Anziehen der Mutter 1 wird das Spannmoment höher und der Kunststoffankerstab droht abgedreht zu werden. Wird jedoch ein Grenzdrehmoment erreicht, so scheren zuvor die Vorsprünge 8 am Umfang der Mutter 1 ab und das Setzwerkzeug 11 dreht nun durch, ohne die Mutter 1 und den Anker 16 weiter anzutreiben. Nach Entfernen des Setzwerkzeuges 11 kann z.B. mittels eines Maulschlüssels die Mutter 1 über die Sechskantflächen 5 später wieder gelöst oder weiter angespannt werden.

Bei Erreichen des Abscherwiderstandes des ersten Drehmomentbegrenzungsmittels bricht der Kunststoffstift 7 relativ spröde in der Weise, dass zwei kurze Endstücke in den seitlichen Bohrungen des Mutternkörpers verbleiben, ohne diesen Mutternkörper z. B. durch Aufweiten und Einreißen der Bohrungen zu beschädigen oder in das Innengewindeprofil zu ragen und die Schraubfunktion durch erhöhte Reibung zu beeinträchtigen. Das ausgebrochene Mittelstück des Stiftes 7 wird beim weiteren Aufschrauben der Mutter 1 durch das Ankerende aus der Mutter 1 ausgetrieben und in den Adaptergrund des Setzwerkzeuges 11 gestoßen.

## Patentansprüche

1. Ankermutter (1) aus faserverstärktem Kunststoff, umfassend
ein Innengewinde (6) zum Aufschrauben auf ein Ankergewinde eines Ankers (16),
sowie außenseitige Konturen oder Formgebungen, durch welche die Ankermutter (1) mittels eines formschlüssig wirkenden Werkzeugs auf einem Ankergewinde schraubbar ist,
wobei die Ankermutter (1) mit einem ersten Drehmomentbegrenzungsmittel (7) versehen ist, welches ein weiteres Einschrauben eines teilweise eingeschraubten Ankers (16) mit einem unterhalb eines ersten Grenz-Drehmoments liegenden Drehmoment verhindert,
und wobei das erste Drehmomentbegrenzungsmittel durch einen Stift (7) gebildet ist, der quer zur Längsachse der Ankermutter (1) das Innengewinde (6) durchquert,
**dadurch gekennzeichnet,**
**dass** die Ankermutter (1) mit zweiten Drehmomentbegrenzungsmitteln (8) versehen ist, welche eine weitere Drehmomentübertragung auf die Ankermutter (1) über die formschlüssig wirkenden Konturen oder Formgebungen verhindern, wenn ein zweites Grenz-Drehmoment erreicht oder überschritten ist,
wobei die zweiten Drehmomentbegrenzungsmittel durch mindestens zwei aus Kunststoff bestehende Vorsprünge (8) gebildet sind, die einstückig an eine Außenfläche (9) der Ankermutter (1) angeformt sind.

2. Ankermutter (1) nach Anspruch 1, **dadurch gekennzeichnet, dass** die zweiten Drehmomentbegrenzungsmittel durch mehrere Vorsprünge (8) gebildet sind, die gleichmäßig verteilt am Außenumfang der Ankermutter (1) angeformt sind.

3. Ankermutter (1) nach Anspruch 2, **dadurch gekennzeichnet, dass** die Vorsprünge (8) zahnförmig oder prismenförmig oder pydramidenförmig ausgebildet sind.

4. Ankermutter (1) nach einem der Ansprüche 1 bis 3, **dadurch gekennzeichnet, dass** der das erste Drehmomentbegrenzungsmittel bildende Stift (7) aus einem Kunststoff besteht, welcher ein sprödes Bruchverhalten aufweist.

5. Ankermutter (1) nach einem der vorherigen Ansprüche, **dadurch gekennzeichnet, dass** die Ankermutter (1) in Längsrichtung in mindestens zwei Stufen (2, 3) ausgebildet ist, die unterschiedliche Durchmesser oder Erstreckungen senkrecht zur Längsachse (L) der Ankermutter (1) aufweisen.

6. Ankermutter (1) nach Anspruch 5, **dadurch gekennzeichnet, dass** die zweiten Drehmomentbegrenzungsmittel (8) an der Kontaktstelle zwischen zwei Stufen (2, 3) an den Außenumfang (9) der kleineren Stufe (3) angeformt sind.

7. Ankermutter (1) nach Anspruch 6, **dadurch gekennzeichnet, dass** die zweiten Drehmomentbegrenzungsmittel (8) zusätzlich auch an die Stirnfläche (10) der größeren Stufe (2) angeformt sind, wobei senkrecht zur Längsachse (L) der Ankermutter (1) die maximale Erstreckung der zweiten Drehmomentbegrenzungsmittel (8) kleiner oder höchstens gleich der Erstreckung der größeren Stufe (2) ist.

8. Ankermutter (1) nach einem der vorherigen Ansprüche, **dadurch gekennzeichnet, dass** die Ankermutter (1) außenseitige Formelemente (5) aufweist, durch welche die Ankermutter (1) mittels eines formschlüssig wirkenden Werkzeugs auch nach dem Auslösen der zweiten Drehmomentbegrenzungsmittel (8) schraubbar ist.

9. Ankermutter (1) nach Anspruch 8 in Kombination mit einem der Ansprüche 5 bis 7, **dadurch gekennzeichnet, dass** die Formelemente durch eine polygonförmige Außenkontur (5) an der kleineren Stufe (3) gebildet sind, welche vorzugsweise als Zweikant oder insbesondere als Sechskant ausgebildet ist.

10. Ankermutter (1) nach einem der vorherigen Ansprüche, **dadurch gekennzeichnet, dass** sich das Innengewinde (6) über die gesamte Länge der Ankermutter (1) erstreckt.

11. Werkzeug (11) zum Aufschrauben einer Ankermutter (1) nach einem der vorherigen Ansprüche auf ein Ankergewinde eines Ankers (16), **dadurch gekennzeichnet, dass** es eine Innenkontur mit Ausnehmungen (12) aufweist, die komplementär zu den die zweiten Drehmomentbegrenzungsmittel bildenden Vorsprüngen (8) der Ankermutter (1) ausgebildet sind.

12. Anker-Set, umfassend mindestens eine Ankermutter (1) nach einem der Ansprüche 1 bis 10 sowie mindestens einen Anker (16), der vorzugsweise aus faserverstärktem Kunststoff besteht.

13. Anker-Set nach Anspruch 12, **dadurch gekennzeichnet, dass** es mindestens eine Ankerplatte (14) umfasst, die vorzugsweise aus faserverstärktem Kunststoff besteht.

14. Kombination aus einem Werkzeug (11) nach Anspruch 11 mit mindestens einer Ankermutter (1) nach einem der Ansprüche 1 bis 10 oder mit einem Anker-Set nach einem der Ansprüche 12 oder 13.

15. Verfahren zum Versetzen eines Ankers (16) in ein Bohrloch (15) unter Verwendung einer Ankermutter (1) nach einem der Ansprüche 1 bis 10, umfassend zumindest die folgenden Verfahrensschritte:
- mehrere mit aushärtbaren Harzmassen (18, 19) gefüllte Klebepatronen werden in das Bohrloch (15) gefüllt, wobei die zuerst eingeführte Klebepatrone eine Harzmasse (18) enthält, die schneller aushärtet als die Harzmasse (19) nachfolgender Klebepatronen,
- die Ankermutter (1) wird soweit auf den Anker (16) aufgeschraubt, bis der Scherstift (7) an der Stirnfläche des Ankers (16) zur Anlage kommt,
- der Anker (16) wird über die Vorsprünge (8) der Ankermutter (1) drehend in das Bohrloch (15) vorgeschoben, wobei er die eingefüllten Klebepatronen nacheinander aufreißt,
- nach dem Aufreißen der zuerst eingeführten Klebepatrone wird der auf die Ankermutter (1) einwirkende Antrieb zum Drehen und Vorschieben des Ankers (16) für eine Wartezeit gestoppt, die mindestens so lang ist, dass die Harzmasse (18) der zuerst eingeführten Klebepatrone zumindest eine Anfangsaushärtung erreicht hat, welche den Anker (16) verdrehsicher im Bohrloch (15) fixiert,
- nach Ablauf der Wartezeit wird der Antrieb zum Drehen der Ankermutter (1) wieder aktiviert, wobei der Scherstift (7) überlastet wird und zerbricht,
- die Ankermutter (1) wird weiter auf den Anker (16) aufgeschraubt, bis sie gegen ein Hindernis, insbesondere eine auf dem Anker (16) angeordnete Ankerplatte (14) anschlägt, wobei die Vorsprünge (8) überlastet und abgeschert werden.

## Claims

1. An anchor nut (1) made of fibre reinforced plastic, comprising
an internal thread (6) for screwing on an anchor thread of an anchor (16), and outer contours or formations through which the anchor nut (1) may be screwed on an anchor thread by means of a tool acting in a form-fit manner,
the anchor nut (1) being provided with a first torque limiting means (7) that prevents further screwing in of a partially screwed-in anchor (16) with torque below a first limiting torque,
in which the first torque limiting means is formed by means of a pin (7) that crosses the internal thread (6) transversely to the longitudinal axis of the anchor nut (1),
**characterised in that**
the anchor nut (1) it is provided with second torque limiting means (8), which prevent further torque transfer to the anchor nut (1) via the action of form-fit contours or formations, when a second limiting torque is attained or exceeded,
in which the second torque limiting means are formed by at least two protrusions (8) made of plastic, which are formed as one piece on an external surface (9) of the anchor nut (1).

2. An anchor nut (1) according to Claim 1, **characterised in that** the second torque limiting means are formed by several protrusions (8) that are formed uniformly distributed on the external circumference of the anchor nut (1).

3. An anchor nut (1) according to Claim 2 **characterised in that** the protrusions (8) are tooth-shaped or prismatic or pyramid-shaped in form.

4. An anchor nut (1) according to one of the Claims 1 to 3 **characterised in that** the pin (7) forming the first torque limiting means consists of a plastic that features brittleness in braking characteristic.

5. An anchor nut (1) according to one of the preceding claims, **characterised in that** in the longitudinal direction, the anchor nut (1) is formed with at least two steps (2, 3) that feature different diameters or extensions perpendicular to the longitudinal axis (L) of the anchor nut (1).

6. An anchor nut (1) according to Claim 5, **characterised in that** the second torque limiting means (8) at the contact point between the two steps (2, 3) are formed on the external circumference (9) of the smaller step (3).

7. An anchor nut (1) according to Claim 6, **characterised in that** the second torque limiting means (8) are additionally also formed on the face surface (10) of the larger step (2), in which the maximum extension of the second torque limiting means (8) perpendicular to the longitudinal axis (L) of the anchor nut (1) is smaller or at most the same to the extension of the larger step (2).

8. An anchor nut (1) according to one of the preceding claims, **characterised in that** the anchor nut (1) features outer formelements (5) through which the anchor nut (1) may be screwed by means of a tool acting in a form-fit manner also after releasing the second torque limiting means (8).

9. An anchor nut (1) according to Claim 8 in combination with one of the Claims 5 to 7, **characterised in that** the form elements are formed by a polygon shaped outer contour (5) on the smaller step (3), which is preferably formed with two-edges or particularly as a hexagon.

10. An anchor nut (1) according to one of the preceding claims **characterised in that** the internal thread (6) extends through the entire length of the anchor nut (1).

11. A tool (11) for screwing an anchor nut (1) according to one of the preceding claims on an anchor thread of an anchor (16), **characterised in that** it features internal contour recesses (12) that are formed complementarily to the protrusions (8) of the anchor nut (1) which form the second torque limiting means.

12. An anchor set, comprising at least one anchor nut (1) according to any one of claims 1 to 10 and at least one anchor (16) that preferably consists of fibre reinforced plastic.

13. The anchor set according to claim 12, **characterised in that** it comprises at least one anchor plate (14) that preferably consists of fibre reinforced plastic.

14. A combination comprising a tool (11) according to claim 11 with at least one anchor nut (1) according to any one of claims 1 to 10, or with an anchor set according to one of claims 12 or 13.

15. A method for placing an anchor (16) in a borehole (15) with the use of an anchor nut (1) according to any one of claims 1 to 10, comprising at least the following method-related steps:
- several adhesive cartridges that comprise curable resin mass (18, 19) are placed into the borehole (15), wherein the first inserted adhesive cartridge comprises a resin mass (18) that cures more quickly than the resin mass (19) of subsequent adhesive cartridges;
- the anchor nut (1) is screwed onto the anchor (16) until the shear pin (7) comes to rest against the face surface of the anchor (16);
- by means of the projections (8) in the anchor nut (1) the anchor (16) is advanced, under rotation, into the borehole (15), whereby said anchor (16) tears the full adhesive cartridges open one after the other;
- after the first inserted adhesive cartridge has been torn open, the drive, which acts on the anchor nut (1) for rotating and advancing the anchor (16) is stopped for a waiting period which lasts at least until the resin mass (18) of the first-inserted adhesive cartridge has achieved at least initial curing which fixes the anchor (16) in the borehole (15) against further rotation;
- after this waiting period has expired, the drive is re-activated for driving the anchor nut (1), wherein the shear pin (7) is overloaded and breaks;
- the anchor nut (1) is further screwed onto the anchor (16) until it impacts an obstacle, in particular an anchor plate (14) arranged on the anchor (16), whereat the projections (8) are overloaded and sheared off.

## Revendications

1. Ecrou d'ancrage (1) en plastique renforcé avec des fibres, comprenant un filetage intérieur (6) pour visser sur un filetage d'ancrage d'un ancrage (16),
ainsi que des contours ou formages extérieurs par l'intermédiaire desquels l'écrou d'ancrage (1) peut être vissé au moyen d'un outil agissant par complémentarité de forme,
l'écrou d'ancrage (1) étant muni d'un premier limiteur de couple (7), qui évite la poursuite du vissage d'un ancrage (16) partiellement vissé avec un couple se situant en dessous d'un premier couple limite,
et le premier limiteur de couple étant constitué par une goupille (7) qui traverse le filetage intérieur (6) transversalement à l'axe longitudinal de l'écrou d'ancrage (1)
**caractérisé en ce**
**que** l'écrou d'ancrage (1) est muni de deuxièmes limiteurs de couple (8) qui évitent un autre transfert de couple à l'écrou d'ancrage (1) sur les contours et formages agissant par complémentarité de forme, si un deuxième couple limite est atteint ou dépassé,
les deuxièmes limiteurs de couple étant constitués par au moins deux éléments en saillie (8) en plastique qui sont formées de façon monobloc sur une surface extérieure (9) de l'écrou d'ancrage (1).

2. Ecrou d'ancrage (1) selon la revendication 1, **caractérisé en ce que** les deuxièmes limiteurs de couple sont constitués par plusieurs éléments en saillie (8) qui sont formés de façon uniformément répartie sur la circonférence extérieure de l'écrou d'ancrage (1).

3. Ecrou d'ancrage (1) selon la revendication 2, **caractérisé en ce que** les éléments en saillie (8) sont réalisées de forme dentelée ou prismatique ou pyramidale.

4. Ecrou d'ancrage (1) selon les revendications 1 à 3, **caractérisé en ce que** la goupille (7) formant le premier limiteur de couple est en plastique laquelle présente un comportement à la rupture fragile.

5. Ecrou d'ancrage (1) selon l'une des revendications précédentes, **caractérisé en ce que** l'écrou d'ancrage (1) est formé dans le sens longitudinal d'au moins deux gradins (2, 3) qui présentent des diamètres ou projections différents perpendiculairement à l'axe longitudinal (L) de l'écrou d'ancrage (1).

6. Ecrou d'ancrage (1) selon la revendication 5, **caractérisé en ce que** les deuxièmes limiteurs de couple (8) sont formés entre deux gradins (2, 3) à la circonférence extérieure (9) du gradin plus petit (3).

7. Ecrou d'ancrage (1) selon la revendication 6, **caractérisé en ce que** les deuxièmes limiteurs de couple (8) sont en plus formés également sur la face avant (10) du gradin plus grand (2), la projection maximale des deuxièmes limiteurs de couple (8) étant perpendiculairement à l'axe longitudinal (L) de l'écrou d'ancrage (1), plus petite ou au maximum égale à la projection du gradin plus grand (2).

8. Ecrou d'ancrage (1) selon une des revendications précédentes, **caractérisé en ce que** l'écrou d'ancrage (1) présente des éléments de forme extérieurs (5) par lesquels l'écrou d'ancrage (1) peut être également vissé au moyen d'un outil agissant en conformité de forme après déblocage des deuxièmes limiteurs de couple (8).

9. Ecrou d'ancrage (1) selon la revendication 8 en combinaison avec une des revendications 5 à 7, **caractérisé en ce que** les éléments de formes sont formés par un contour extérieur (5) polygonal sur le gradin plus petit (3), lequel est de préférence configuré sous la forme de deux côtés ou en particulier en forme d'hexagone.

10. Ecrou d'ancrage (1) selon une des revendications précédentes, **caractérisé en ce que** le filetage intérieur (6) s'étend sur toute la longueur de l'écrou d'ancrage (1).

11. Outil (11) pour visser un écrou d'ancrage (1) selon une des revendications précédentes sur un filetage d'ancrage d'un ancrage (16) , **caractérisé en ce qu'**il présente un contour intérieur avec des évidements (12), qui sont constitués de façon complémentaire aux éléments en saillie (8) de l'écrou d'ancrage (1), formant les deuxièmes limiteurs de couple.

12. Ensemble d'ancrage, comprenant au moins un écrou d'ancrage (1) selon une des revendications 1 à 10 ainsi qu'au moins un ancrage (16) qui est de préférence en plastique renforcé par des fibres.

13. Ensemble d'ancrage selon la revendication 12, **caractérisé en ce qu'**il comprend au moins une plaque d'ancrage (14) qui est de préférence en plastique renforcé par des fibres.

14. Combinaison d'un outil (11) selon la revendication 11 avec au moins un écrou d'ancrage (1) selon les revendications 1 à 10 ou avec un ensemble d'ancrage selon les revendications 12 ou 13.

15. Procédé pour déplacer un ancrage (16) dans un trou de forage (15) en utilisant un écrou d'ancrage (1) selon une des revendications 1 à 10, comprenant au moins les phases de procédé suivantes :
- plusieurs cartouches de résine remplies de compositions résineuses (18, 19) durcissables sont mises dans le trou de forage (15), la cartouche de résine introduite la première contenant une masse résineuse (18) qui durcit plus rapidement que la masse résineuse (19) des cartouches de résine suivantes,
- l'écrou d'ancrage (1) est vissé sur l'ancrage (16) jusqu'à ce que la goupille de cisaillement (7) vienne en butée sur la face avant de l'ancrage (16),
- l'ancrage (16) est avancé sur les éléments en saillie (8) de l'écrou d'ancrage (1) en tournant dans le trou de forage (15), défonçant de ce fait les cartouches de résine remplies,
- après avoir défoncé la cartouche de résine introduite la première, l'impulsion agissant sur l'écrou d'ancrage (1) pour faire tourner et avancer l'ancrage (16) est arrêtée pour un temps d'attente, qui dure au moins jusqu'à ce que la masse résineuse (18) de la cartouche de résine introduite la première ait atteint au moins un durcissement initial qui fixe l'ancrage (16) contre toute torsion dans le trou de forage (15),
- une fois le temps d'attente écoulé, l'impulsion agissant pour faire tourner l'écrou d'ancrage (1) est à nouveau activée, la goupille de cisaillement (7) est alors en surcharge et se brise,
- l'écrou d'ancrage (1) continue d'être vissé sur l'ancrage (16) jusqu'à ce qu'il butte contre un obstacle, en particulier une plaque d'ancrage (14) disposée sur l'ancrage (16), les éléments en saillie (8) étant alors en surcharge et cisaillés.
